# EUROPÄISCHE PATENTSCHRIFT

(11) **EP 3 187 872 B1**
(45) Veröffentlichungstag und Bekanntmachung des Hinweises auf die Patenterteilung: **28.11.2018**
(21) Anmeldenummer: 15203057.3
(22) Anmeldetag: 30.12.2015
(51) Int. Cl.: G01N 29/14, G07F 19/00, G10L 17/00, G06Q 10/00, G07F 9/02, G10L 17/04, G10L 17/06, G10L 17/22

(54) **VERFAHREN ZUM ERMITTELN DES ZUSTANDES VON ZUGANGSKONTROLLVORRICHTUNGEN UND VERKAUFS- ODER BEZAHLAUTOMATEN EINES ZUGANGSKONTROLLSYSTEMS**
METHOD FOR DETERMINING THE CONDITION OF ACCESS CONTROL DEVICES AND SALES OR PAYMENT MACHINES OF AN ACCESS CONTROL SYSTEM
PROCEDE DE DETERMINATION DE L'ETAT DE DISPOSITIFS DE CONTROLE D'ACCES ET DE TERMINAUX DE PAIEMENT OU D'ACHAT D'UN SYSTEME DE CONTROLE D'ACCES

(43) Veröffentlichungstag der Anmeldung: 05.07.2017
(73) Patentinhaber: SKIDATA AG, 5083 Grödig/Salzburg (AT)
(72) Erfinder: Schlechter, Thomas Dr., 5201 Seekirchen am Wallersee (AT); Buchegger, Thomas Dr., 4407 Dietach (AT); Pichler, Markus Dr., 4532 Kematen an der Krems (AT); Hesch, Clemens Dr., 4020 Linz (AT)
(74) Vertreter: Karakatsanis, Georgios

(56) Entgegenhaltungen:
- EP-A1- 0 851 394
- WO-A1-90/09644
- US-A1- 2009 091 441
- US-A1- 2010 063 776

## Beschreibung

Die vorliegende Erfindung bezieht sich auf ein Verfahren zum Ermitteln des Zustandes von Zugangskontrollvorrichtungen und Verkaufs- oder Bezahlautomaten eines Zugangskontrollsystems gemäß dem Oberbegriff des Patentanspruchs 1.

Ein Zugangskontrollsystem für Fahrzeuge oder Personen umfasst in der Regel mehrere Zugangskontrollvorrichtungen, welche eine Leseeinheit zum Auslesen der zur Überprüfung der Gültigkeit einer Zugangsberechtigung erforderlichen Daten und ein Sperrorgan, welches von einem über eine Steuerung gesteuerten Aktuator betätigt wird, um einer Person bzw. einem Fahrzeug zu ermöglichen ein Gebäude bzw. ein Gelände zu betreten oder zu verlassen, aufweisen. Ferner umfassen Zugangskontrollsysteme Verkaufsautomaten für die Zugangsberechtigungen und/oder Bezahlautomaten zum Entrichten der Gebühr für die Nutzung des Zugangskontrollsystems. Bezahlautomaten sind in der Regel bei Zugangskontrollvorrichtungen für Kraftfahrzeuge, beispielsweise in Parkhäusern vorgesehen.

Die oben genannten Zugangskontrollvorrichtungen bzw. Verkaufs- oder Bezahlautomaten eines Zugangskontrollsystems umfassen neben elektronischen auch mehrere mechanische Komponenten, wie beispielsweise Sperrorgane, die bei Auslesen einer gültigen Zugangsberechtigung von einer Sperrstellung in eine Freistellung überführt werden oder Münzenrückgabemodule umfassend Förderbänder zum Transport der als Rückgeld dienenden Münzen, Banknoteneingabe- und Ausgabemodule, Ticket- oder Kreditkarteneinzugsmodule, Druckermodule für die Zugangsberechtigungen oder Elektromotoren zum Antreiben der mechanisch betätigbaren Bauteile. Ferner sind Lüfter zum Abführen der im Betrieb der Komponenten entstehenden Wärme vorgesehen.

Für die Zugangskontrollvorrichtungen bzw. Verkaufs- oder Bezahlautomaten eines Zugangskontrollsystems sind in der Regel vorgegebene Wartungsintervalle vorgeschrieben, um einen Ausfall während des Betriebs zu verhindern. Dennoch können einzelne Komponenten dieser Vorrichtungen einer höheren Belastung als die erwartete ausgesetzt sein, was in nachteiliger Weise zu einem erhöhten Verschleiß und in einem nächsten Schritt zu einem Ausfall dieser Komponenten zwischen zwei regelmäßigen Wartungszeitpunkten führen kann. Ferner kann im Einzelfall ein festgelegtes Wartungsintervall verlängert bzw. an die realen Bedingungen angepasst werden, wenn ein niedrigerer Verschleiß als üblich vorliegt. Ferner sind aus dem Stand der Technik wartungsfreie Zugangskontrollvorrichtungen bzw. Verkaufs- oder Bezahlautomaten von Zugangskontrollsystemen bekannt, so dass eine rechtzeitige Erfassung von Defekten oder erhöhtem Verschleiß von besonderer Bedeutung für den Betrieb des Zugangskontrollsystems ist.

Der vorliegenden Erfindung liegt die Aufgabe zugrunde, ein Verfahren zum Ermitteln des Zustandes von Zugangskontrollvorrichtungen und Verkaufs- oder Bezahlautomaten eines Zugangskontrollsystems anzugeben, durch dessen Durchführung ein Verschleiß von Bauteilen, der zu einem Ausfall der Bauteile führen kann, rechtzeitig erkannt wird. Des Weiteren soll mittels des erfindungsgemäßen Verfahrens bei Ausfall einer Zugangskontrollvorrichtung oder eines Verkaufs- oder Bezahlautomaten eines Zugangskontrollsystems festgestellt werden können, welche Komponente einen Defekt aufweist; zudem sollen Vandalismusversuche erkannt werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zum Ermitteln des Zustandes von Zugangskontrollvorrichtungen und Verkaufs- oder Bezahlautomaten eines Zugangskontrollsystems vorgeschlagen, im Rahmen dessen das von einer Komponente oder Komponentengruppe einer Zugangskontrollvorrichtung oder eines Verkaufs- oder Bezahlautomaten eines Zugangskontrollsystems während des Betriebs emittierte Schallprofil im Hörschall- oder Ultraschallbereich permanent oder in vorgegebenen Zeitabständen von zumindest einem Mikrofon erfasst wird und anhand des aufgenommenen Schallprofils in einem Server bzw. Zentralrechner eine akustische Identifikationssignatur erstellt wird, welche auf dem Frequenzspektrum des aufgenommenen Schallprofils und/oder dessen zeitlicher Änderung basiert, wobei die akustische Identifikationssignatur einer Komponente oder Komponentengruppe zugeordnet wird und mit einer dieser Komponente oder Komponentengruppe zugeordneten, im Server abgelegten akustischen Referenzidentifikationssignatur verglichen wird und wobei bei Erkennung einer Abweichung der erfassten akustischen Identifikationssignatur von der im Server abgelegten akustischen Referenzidentifikationssignatur, die einen vorgegebenen ersten Schwellenwert überschreitet, ein erhöhter Verschleiß der Komponente oder der Komponentengruppe erkannt wird, wobei, wenn die Abweichung der erfassten akustischen Identifikationssignatur von der im Server abgelegten akustischen Referenzidentifikationssignatur einen zweiten Schwellenwert überschreitet, der höher als der erste Schwellenwert ist, ein Defekt der Komponente oder der Komponentengruppe erkannt wird. Hierbei werden im Rahmen einer Lernphase von dem zumindest einen Mikrofon die im Betrieb einer intakten Zugangskontrollvorrichtung oder eines intakten Verkaufs- oder Bezahlautomaten eines Zugangskontrollsystems üblichen Geräusche aufgenommen, wobei die aufgenommenen Tonsignale jeweils einer Komponente- oder einer Komponentengruppe zugeordnet werden. Aus den aufgenommenen Tonsignalen werden im Server akustische Referenzidentifikationssignaturen für die Komponenten oder Komponentengruppen erstellt und abgelegt, wobei die Zuordnung der aufgenommenen Tonsignale und somit der Referenzidentifikationssignaturen zu den Komponenten oder Komponentengruppen erfindungsgemäß dadurch erfolgt, dass der Beginn des Betriebs der Zugangskontrollvorrichtung oder des Verkaufs- oder Bezahlautomaten anhand der vom zumindest einen Mikrofon gelieferten Signale erkannt wird, wobei unter Berücksichtigung der bekannten genauen Abfolge der einzelnen Operationen der Zugangskontrollvorrichtung oder eines Verkaufs- oder Bezahlautomaten die Tonsignale eindeutig einer Operation und somit einer Komponente- oder einer Komponentengruppe zugeordnet werden oder dadurch erfolgt, dass die Zugangskontrollvorrichtungen und Verkaufs- oder Bezahlautomaten des Zugangskontrollsystems mit dem Server zum Zweck der Datenkommunikation verbunden sind und dem Server in Echtzeit die Information übermittelt wird, welche Komponente oder Komponentengruppe aktiv ist, so dass die aufgenommenen Tonsignale im Server der jeweils aktuell aktiven Komponente oder Komponentengruppe zugeordnet werden.

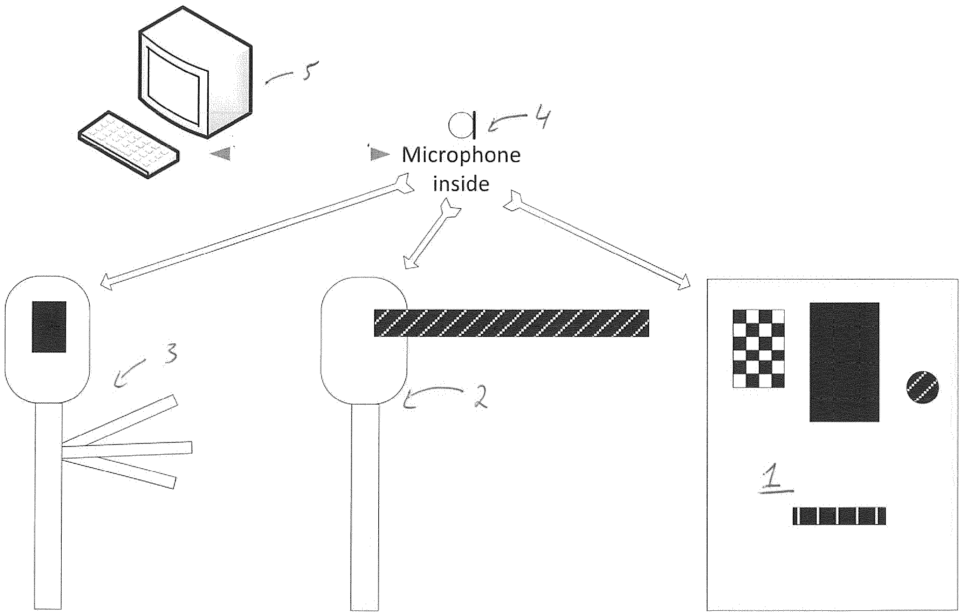

Das zumindest ein Mikrofon kann innerhalb oder außerhalb einer Zugangskontrollvorrichtung oder eines Verkaufs- oder Bezahlautomaten eines Zugangskontrollsystems angeordnet sein. Bei dem in der Figur gezeigten Beispiel sind ein Bezahlautomat 1, eine Zugangskontrollvorrichtung 2 für Fahrzeuge und eine als Drehkreuz ausgeführte Zugangskontrollvorrichtung 3 für Fahrzeuge dargestellt, wobei innerhalb dieser Geräte jeweils zumindest ein Mikrofon 4 angeordnet ist. Ein Server in dem anhand des aufgenommenen Schallprofils eine akustische Identifikationssignatur erstellt wird, ist in der Figur mit dem Bezugszeichen 5 Ersehen.

Ferner ist aus der Veröffentlichung EP-A1-0851394 ein Verfahren gemäß dem Oberbegriff des Anspruchs 1 bekannt.

Die vorgegebenen Abstände der Erfassung des während des Betriebs emittierten Schallprofils sind derart gewählt, dass die von sämtlichen Komponenten oder Komponentengruppen während des Betriebs emittierten Geräusche erfasst werden.

Die Zuordnung einer erfassten Identifikationssignatur zu einer Komponente oder Komponentengruppe erfolgt gemäß einer Ausgestaltung der Erfindung anhand charakteristischer Eigenschaften des von der Komponente oder Komponentengruppe emittierten Schallprofils.

Die Zuordnung einer erfassten Identifikationssignatur zu einer Komponente oder Komponentengruppe kann auch dadurch erfolgen, dass anhand der bekannten genauen Abfolge der einzelnen Operationen im Betrieb einer Zugangskontrollvorrichtung oder eines Verkaufs- oder Bezahlautomaten eines Zugangskontrollsystems, die erfasste Identifikationssignatur eindeutig einer Operation und somit einer Komponente- oder einer Komponentengruppe zugeordnet wird, wobei der Beginn des Betriebs der Zugangskontrollvorrichtung oder des Verkaufs- oder Bezahlautomaten anhand der vom zumindest einen Mikrofon gelieferten Signale erkannt wird.

Im Rahmen einer Weiterbildung der Erfindung sind die Zugangskontrollvorrichtungen und Verkaufs- oder Bezahlautomaten eines Zugangskontrollsystems mit dem Server zum Zweck der Datenkommunikation verbunden, wobei dem Server in Echtzeit die Information übermittelt wird, welche Komponente oder Komponentengruppe aktiv ist, so dass auf diese Weise die Zuordnung einer erfassten Identifikationssignatur zu einer Komponente oder Komponentengruppe erfolgt.

Optional kann vorgesehen sein, dass bei Erkennung einer Abweichung der erfassten akustischen Identifikationssignatur von der im Server abgelegten akustischen Referenzidentifikationssignatur, die den vorgegebenen ersten Schwellenwert überschreitet, ein erhöhter Verschleiß der Komponente oder der Komponentengruppe erkannt wird, und dass wenn die Abweichung der erfassten akustischen Identifikationssignatur von der im Server abgelegten akustischen Referenzidentifikationssignatur den zweiten Schwellenwert überschreitet, ein Defekt der Komponente oder der Komponentengruppe erkannt wird, wenn die jeweiligen Schwellenwerte für ein vorgegebenes Zeitintervall ständig überschritten werden.

Eine akustische Identifikationssignatur kann beispielsweise aus dem aufgenommenen Schallprofil bzw. Messsignal durch folgende Schritte berechnet werden:
1. Aufteilen des Messsignals in N aufeinanderfolgende Teilblöcke;
2. für alle N Teilblöcke des Signals:
   a. Subtraktion des Mittelwertes (zero-mean adjustment);
   b. Schnelle Fourier-Transformation (FFT) des Signals;
   c. Normalisierung durch Division durch die Summe der Absolutbeträge der Spektralwerte;
3. Berechnung des mittleren Spektrums aller N Spektren der Teilblöcke; und
4. Moving-Average-Glättung des mittleren Spektrums im Frequenzbereich.

Eine akustische Identifikationssignatur kann mit der im Server abgelegten akustischen Referenzidentifikationssignatur beispielsweise dadurch verglichen werden, dass die punktweisen Differenzen im Frequenzspektrum aufsummiert werden, um ein Abweichungsmaß zu erhalten. Die Referenzidentifikationssignatur einer Komponente oder einer Komponentengruppe entspricht der akustischen Identifikationssignatur dieser Komponente bzw. Komponentengruppe, in einem defektlosen Zustand mit sehr geringem oder ohne Verschleiß.

Alternativ kann das Erstellen einer akustischen Identifikationssignatur aus dem aufgenommenen Schallprofil bzw. Messsignal auf der Extraktion und anschließender Selektion eines definierten Satzes an Signal-Eigenschaften beruhen. Eigenschaften, welche hierfür in Frage kommen sind z.B. Eigenschaften aus dem Zeitbereich, wie etwa der Energiegehalt des Signals innerhalb eines kurzen definierten Zeitfensters (short-term Energy), spektrale Eigenschaften, wie z.B. der spektrale Schwerpunkt des Signals (Spectral Centroid) oder die aktuelle Streuung um einen Frequenzbereich (Spectral Spread), Bandenergien, wobei das Spektrum in definierte Frequenzbänder eingeteilt wird, innerhalb deren die vorhandene Energie des Signals berechnet wird und die so genannten Mel Frequency Cepstral Coefficients (MFCC-Koeffizienten), welche aus der Spracherkennung bekannt sind und zu einer kompakten Darstellung des Frequenzspektrums führen. Die Berechnung dieser Koeffizienten ist in der Literatur umfassend beschrieben und dem Fachmann bestens bekannt.

Anschließend wird untersucht, welche der gewonnenen oben beschriebenen Eigenschaften am wenigsten zur eindeutigen Abgrenzung der Referenzdaten des Signals beitragen. Zudem wird untersucht, wie gut der aktuelle Satz an Signal-Eigenschaften eine Unterscheidung einzelner aufgenommener Signale bzw. Schallprofile ermöglicht, wobei in einem nächsten Schritt die am wenigsten relevante Eigenschaft aus der Beobachtung entfernt wird. Obige Schritte werden danach erneut durchgeführt, bis es schließlich an einem Punkt statt zu einer Verbesserung des Ergebnisses zu einer Verschlechterung des Ergebnisses kommt. An diesem Punkt sind nun alle überflüssigen Eigenschaften eliminiert worden. Eine weitere Ausdünnung würde zwar die Gesamtkomplexität weiter verringern, jedoch auch die Performance des Systems nicht optimal ausnutzen. Dadurch wird ein Satz an Signal-Eigenschaften geschaffen, welcher für einen vorgegebenen Anwendungsbereich, im vorliegenden Fall für die Identifikationssignaturen von Zugangskontrollvorrichtungen und Verkaufs- oder Bezahlautomaten eines Zugangskontrollsystems optimal ist und in nachfolgenden Schritten nicht wieder neu abgeleitet werden muss.

Eine akustische Identifikationssignatur hierbei kann mit der im Server abgelegten akustischen Referenzidentifikationssignatur beispielsweise dadurch verglichen werden, dass die punktweisen Differenzen der Signal-Eigenschaften des Satzes an Signal-Eigenschaften, welcher für einen vorgegebenen Anwendungsbereich optimal ist, aufsummiert werden, um ein Abweichungsmaß zu erhalten.

Im Rahmen einer Lernphase werden von dem zumindest einen Mikrofon die im Betrieb einer intakten Zugangskontrollvorrichtung oder eines Verkaufs- oder Bezahlautomaten eines Zugangskontrollsystems üblichen Geräusche aufgenommen, wobei auf diese Weise die aufgenommenen Tonsignale im Server unter Berücksichtigung der bekannten genauen Abfolge der einzelnen Operationen der Zugangskontrollvorrichtung oder des Verkaufs- oder Bezahlautomaten jeweils eindeutig einer Operation und somit einer Komponente- oder einer Komponentengruppe zugeordnet werden, die an der Operation beteiligt ist und wobei aus den aufgenommenen Tonsignalen im Server akustische Referenzidentifikationssignaturen für die Komponenten oder Komponentengruppen erstellt und abgelegt werden. Wenn beispielsweise laut Ablaufplan bei einem Bezahlautomaten gerade der Münzeinwurf aktiv ist, sind die aufgenommenen Signale den während des Münzeinwurfs aktiven Komponenten, wie der Münzschlitzverriegelung, der Münzprüfung etc. zuzuordnen. Wird laut Ablaufplan eine Karte, beispielsweise eine Kreditkarte eingezogen, so werden die Tonsignale den Komponenten des Karteneinzugs zugeordnet. Der Beginn des Betriebs der Zugangskontrollvorrichtung oder des Verkaufs- oder Bezahlautomaten wird anhand der vom zumindest einen Mikrofon gelieferten Signale erkannt, so dass unter Berücksichtigung der bekannten genauen Abfolge der einzelnen Operationen nach Beginn des Betriebs die Zuordnung den aufgenommenen Tonsignale und somit der Referenzidentifikationssignaturen zu den Komponenten oder Komponentengruppen erfolgt.

Wenn die Zugangskontrollvorrichtungen und Verkaufs- oder Bezahlautomaten eines Zugangskontrollsystems mit dem Server zum Zweck der Datenkommunikation verbunden sind und dem Server in Echtzeit die Information übermittelt wird, welche Komponente oder Komponentengruppe aktiv ist, erfolgt die Lernphase dadurch, dass von dem zumindest einen Mikrofon die im Betrieb einer intakten Zugangskontrollvorrichtung oder eines Verkaufs- oder Bezahlautomaten eines Zugangskontrollsystems üblichen Geräusche aufgenommen werden, welche im Server der jeweils aktuell aktiven Komponente oder Komponentengruppe zugeordnet werden; anschließend wird im Server die entsprechende Referenzidentifikationssignatur erstellt.

Des Weiteren werden gemäß einer Weiterbildung der Erfindung übliche Umgebungsgeräusche mit aufgenommen und als Standard-Geräuschkulisse abgelegt.

Wenn einige Komponenten des Automaten immer nur gleichzeitig mit anderen Komponenten als Komponentengruppe aktiviert sind, kann gemäß dem Verfahren zunächst erkannt werden, dass zumindest eine Komponente dieser Komponentengruppe defekt ist.

Um die Genauigkeit des Verfahrens zu erhöhen, kann jeder Komponente zumindest ein Mikrofon zugeordnet sein, welches im Inneren der Zugangskontrollvorrichtung oder des Verkaufs- oder Bezahlautomaten eines Zugangskontrollsystems, z.B. in einem Verkaufsautomaten, oder extern angeordnet ist. In diesem Fall kann die Zuordnung einer erfassten Identifikationssignatur zu einer Komponente dadurch erfolgen, dass das von einem Mikrofon aufgenommene zugrundeliegende Schallprofil der Komponente zugeordnet wird, der das Mikrofon zugeordnet ist.

Im Rahmen einer Weiterbildung der Erfindung sind im Server neben einer akustischen Referenzidentifikationssignatur für eine Komponente oder eine Komponentengruppe Identifikationssignaturen abgelegt, welche jeweils einem konkreten Defekt einer Komponente oder einer Komponentengruppe entsprechen. Auf diese Weise kann eine nicht der Referenzidentifikationssignatur entsprechende Identifikationssignatur bei hinreichender Übereinstimmung mit einer einem konkreten Defekt einer Komponente oder einer Komponentengruppe zugeordneten Identifikationssignatur direkt dem jeweiligen Defekt einer Komponente oder einer Komponentengruppe zugeordnet werden, so dass unmittelbar geeignete Maßnahmen eingeleitet werden können. Beispielsweise kann ein spezialisierter Techniker vor Ort das Gerät gezielt inspizieren und gegebenenfalls Bauteile austauschen. Diese Signaturen werden dem einer Komponente oder einer Komponentengruppe zugeordneten Datensatz hinzugefügt, wenn die konkreten Defekte erstmalig auftreten.

Eine hinreichende Übereinstimmung liegt vor, wenn die Abweichung der erfassten akustischen Identifikationssignatur von der im Server abgelegten akustischen Identifikationssignatur einen dritten vorgegebenen Schwellenwert unterschreitet.

Gemäß der Erfindung werden bei erfassten Identifikationssignaturen, die weder der Referenzidentifikationssignatur noch einer einem Defekt einer Komponente oder einer Komponentengruppe zugeordneten Identifikationssignatur entsprechen, diese im Server als neue Identifikationssignaturen abgelegt, die einem noch nicht klassifizierten bzw. kategorisierten Defekt entsprechen, wobei die Klassifizierung bzw. Kategorisierung dann erfolgt, wenn der Defekt identifiziert worden ist.

Durch die erfindungsgemäße Konzeption kann rechtzeitig erkannt werden, ob eine Komponente ausgetauscht werden soll oder ob eine außerplanmäßige Schmierung erforderlich ist etc.

Im Rahmen einer weiteren Ausgestaltung der Erfindung kann bei einer erfassten Identifikationssignatur, die keiner Komponente oder Komponentengruppe zugeordnet werden kann oder deren Abweichung von sämtlichen akustischen Referenzidentifikationssignaturen den zweiten Schwellenwert überschreitet und keinem Defekt einer Komponente oder Komponentengruppe entsprechen kann, was beispielsweise aufgrund der Intensität und des Entstehungsortes festgestellt werden kann, ein Vandalismusversuch bzw. Gewalteinwirkung erkannt werden.

Analog dazu können aufgrund einer erfassten Identifikationssignatur starker Regen oder starker Wind erkannt werden, was eine temporäre Deaktivierung eines Gerätes veranlassen kann, um eine Beschädigung zu vermeiden. Zu diesem Zweck sind im Server Referenzsignaturen abgelegt, die starkem Regen oder starkem Wind entsprechen.

Beispielsweise kann eine Zugangskontrollvorrichtung für Fahrzeuge umfassend einen Schrankenbaum bei Erfassung einer Identifikationssignatur, welche starkem Wind entspricht, deaktiviert werden, um eine Beschädigung der ankommenden Fahrzeuge aufgrund des Windes zu verhindern. Ferner können bei Erkennung von starkem Regen empfindliche Komponenten, beispielsweise der Ticketeinschub eines Bezahlautomaten mittels einer geeigneten Vorrichtung abgedeckt werden, um einen Schaden durch den Regen zu verhindern.

## Patentansprüche

1. Verfahren zum Ermitteln des Zustandes von Zugangskontrollvorrichtungen und Verkaufs- oder Bezahlautomaten eines Zugangskontrollsystems, wobei das von einer Komponente oder Komponentengruppe einer Zugangskontrollvorrichtung oder eines Verkaufs- oder Bezahlautomaten eines Zugangskontrollsystems während des Betriebs emittierte Schallprofil im Hörschall- oder Ultraschallbereich permanent oder in vorgegebenen Zeitabständen von zumindest einem Mikrofon erfasst wird und anhand des aufgenommenen Schallprofils in einem Server bzw. Zentralrechner eine akustische Identifikationssignatur erstellt wird, welche auf dem Frequenzspektrum des aufgenommenen Schallprofils und/oder dessen zeitlicher Änderung basiert, wobei die akustische Identifikationssignatur einer Komponente oder Komponentengruppe zugeordnet wird und mit einer dieser Komponente oder Komponentengruppe zugeordneten, im Server abgelegten akustischen Referenzidentifikationssignatur verglichen wird, **dadurch gekennzeichnet, dass** bei Erkennung einer Abweichung der erfassten akustischen Identifikationssignatur von der im Server abgelegten akustischen Referenzidentifikationssignatur, die einen vorgegebenen ersten Schwellenwert überschreitet, ein erhöhter Verschleiß der Komponente oder der Komponentengruppe erkannt wird, wobei, wenn die Abweichung der erfassten akustischen Identifikationssignatur von der im Server abgelegten akustischen Referenzidentifikationssignatur einen zweiten Schwellenwert überschreitet, der höher als der erste Schwellenwert ist, ein Defekt der Komponente oder der Komponentengruppe erkannt wird, wobei im Rahmen einer Lernphase von dem zumindest einen Mikrofon die im Betrieb einer intakten Zugangskontrollvorrichtung oder eines intakten Verkaufs- oder Bezahlautomaten eines Zugangskontrollsystems üblichen Geräusche aufgenommen werden, wobei die aufgenommenen Tonsignale jeweils einer Komponente- oder einer Komponentengruppe zugeordnet werden, und wobei aus den aufgenommenen Tonsignalen im Server akustische Referenzidentifikationssignaturen für die Komponenten oder Komponentengruppen erstellt und abgelegt werden, wobei die Zuordnung der aufgenommenen Tonsignale und somit der Referenzidentifikationssignaturen zu den Komponenten oder Komponentengruppen dadurch erfolgt, dass der Beginn des Betriebs der Zugangskontrollvorrichtung oder des Verkaufs- oder Bezahlautomaten anhand der vom zumindest einen Mikrofon gelieferten Signale erkannt wird, wobei unter Berücksichtigung der bekannten genauen Abfolge der einzelnen Operationen der Zugangskontrollvorrichtung oder eines Verkaufs- oder Bezahlautomaten die Tonsignale eindeutig einer Operation und somit einer Komponente- oder einer Komponentengruppe zugeordnet werden oder dadurch erfolgt, dass die Zugangskontrollvorrichtungen und Verkaufs- oder Bezahlautomaten des Zugangskontrollsystems mit dem Server zum Zweck der Datenkommunikation verbunden sind und dem Server in Echtzeit die Information übermittelt wird, welche Komponente oder Komponentengruppe aktiv ist, so dass die aufgenommenen Tonsignale im Server der jeweils aktuell aktiven Komponente oder Komponentengruppe zugeordnet werden, wobei die Zuordnung einer erfassten Identifikationssignatur zu einer Komponente oder Komponentengruppe anhand charakteristischer Eigenschaften des von der Komponente oder Komponentengruppe emittierten Schallprofils erfolgt oder wobei die Zuordnung einer erfassten Identifikationssignatur zu einer Komponente oder Komponentengruppe dadurch erfolgt, dass anhand der bekannten genauen Abfolge der einzelnen Operationen im Betrieb einer Zugangskontrollvorrichtung oder eines Verkaufs- oder Bezahlautomaten eines Zugangskontrollsystems, die erfasste Identifikationssignatur eindeutig einer Operation und somit einer Komponente- oder einer Komponentengruppe zugeordnet wird, wobei der Beginn des Betriebs der Zugangskontrollvorrichtung oder des Verkaufs- oder Bezahlautomaten anhand der vom zumindest einen Mikrofon gelieferten Signale erkannt wird oder wobei die Zugangskontrollvorrichtungen und Verkaufs- oder Bezahlautomaten mit dem Server zum Zweck der Datenkommunikation verbunden sind und dem Server in Echtzeit die Information übermittelt wird, welche Komponente oder Komponentengruppe aktiv ist, so dass auf diese Weise die Zuordnung einer erfassten Identifikationssignatur zu einer Komponente oder Komponentengruppe erfolgt.

2. Verfahren zum Ermitteln des Zustandes von Zugangskontrollvorrichtungen und Verkaufs- oder Bezahlautomaten eines Zugangskontrollsystems nach Anspruch 1, **dadurch gekennzeichnet, dass** im Server neben einer akustischen Referenzidentifikationssignatur für eine Komponente oder eine Komponentengruppe Identifikationssignaturen abgelegt sind, welche jeweils einem konkreten Defekt einer Komponente oder einer Komponentengruppe entsprechen, wobei eine nicht der Referenzidentifikationssignatur entsprechende Identifikationssignatur bei hinreichender Übereinstimmung mit einer einem konkreten Defekt einer Komponente oder einer Komponentengruppe entsprechenden Identifikationssignatur direkt dem jeweiligen Defekt einer Komponente oder einer Komponentengruppe zugeordnet werden kann.

3. Verfahren zum Ermitteln des Zustandes von Zugangskontrollvorrichtungen und Verkaufs- oder Bezahlautomaten eines Zugangskontrollsystems nach Anspruch 2, **dadurch gekennzeichnet, dass** bei erfassten Identifikationssignaturen, die weder der Referenzidentifikationssignatur noch einer einem Defekt einer Komponente oder einer Komponentengruppe zugeordneten Identifikationssignatur entsprechen, diese im Server als neue Identifikationssignaturen abgelegt werden, die einem noch nicht klassifizierten bzw. kategorisierten Defekt entsprechen, wobei die Klassifizierung bzw. Kategorisierung dann erfolgt, wenn der Defekt identifiziert worden ist.

4. Verfahren zum Ermitteln des Zustandes von Zugangskontrollvorrichtungen und Verkaufs- oder Bezahlautomaten eines Zugangskontrollsystems nach einem der vorangehenden Ansprüche, **dadurch gekennzeichnet**, bei einer erfassten Identifikationssignatur, die keiner Komponente oder Komponentengruppe zugeordnet werden kann oder deren Abweichung von sämtlichen akustischen Referenzidentifikationssignaturen den zweiten Schwellenwert überschreitet und keinem Defekt einer Komponente oder Komponentengruppe entsprechen kann, ein Vandalismusversuch bzw. Gewalteinwirkung erkannt werden.

5. Verfahren zum Ermitteln des Zustandes von Zugangskontrollvorrichtungen und Verkaufs- oder Bezahlautomaten eines Zugangskontrollsystems nach einem der vorangehenden Ansprüche, **dadurch gekennzeichnet, dass** im Server Referenzsignaturen abgelegt sind, die starkem Regen oder starkem Wind entsprechen, wobei, wenn aufgrund einer erfassten Identifikationssignatur starker Regen oder starker Wind erkannt werden, eine temporäre Deaktivierung veranlasst wird, um eine Beschädigung zu vermeiden.

## Claims

1. A method of determining a state of access control devices and sales or payment machines of an access control system, wherein the sound profile in the audible or an ultrasonic range emitted during operation by a component or a component group of an access control device or a sales or payment machine of an access control system is detected, permanently or in predetermined time intervals, by at least one microphone and on the basis of the recorded sound profile, an acoustic identification signature is created in a server or a central computer, which identification signature is based on the frequency spectrum of the recorded sound profile and/or the time variation thereof, wherein the acoustic identification signature is assigned to a component or a component group and compared with an acoustic reference identification signature which is stored in the server and assigned to this component or component group, **characterized in that** in the event of detection of a deviation of the detected acoustic identification signature from the acoustic reference identification signature stored in the server, which deviation exceeds a predetermined first threshold value, an increased wear of the component or the component group is detected, and if the deviation of the detected acoustic identification signature from the acoustic reference identification signature stored in the server exceeds a second threshold value, which is higher than the first threshold value, a defect of the component or the component group is identified, wherein, in a context of a learning phase, usual sounds during operation of an intact access control device or an intact sales or payment machine of an access control system are recorded by the at least one microphone, wherein the recorded sound signals are, in each case, assigned to one component or one component group, and wherein acoustic reference identification signatures for the components or component groups are created from the recorded sound signals and stored in the server, wherein the assignment of the recorded sound signals and thus the reference identification signatures to the components or component groups takes place whereby the beginning of the operation of the access control device or the sales or the payment machine is detected on the basis of the signals delivered by at least one microphone, wherein, taking account the known precise sequence of the individual operations of the access control device or a sales or payment machine, the sound signals are, in each case, assigned uniquely to one operation and thus one component or one component group or whereby the access control devices and sales or payment machines of the access control system are connected to the server for the purpose of data communication and the information as to which component or component group is active is transmitted to the server in real time so that the recorded sound signals are assigned, in the server, to the currently active component or component group in each case, wherein a detected identification signature is assigned to a component or component group on the basis of characteristic properties of the sound profile emitted by the component or component group or wherein a detected identification signature is assigned to a component or component group whereby on the basis of a known precise sequence of the individual operations during the operation of an access control device or the sales or payment machine of the access control system, the detected identification signature is uniquely assigned to one operation and therefore one component or one component group, wherein the start of operation of the access control device or the sales or payment machine is identified on a basis of the signals delivered by the at least one microphone or wherein the access control devices and sales or payment machines are connected to the server for data communication, and the information as to which component or component group is active is transmitted to the server in real time so that the assignment of a detected identification signature to a component or component group takes place in this manner.

2. The method of determining the state of access control devices and sales or payment machines of the access control system according to claim 1, **characterized in that** identification signatures, in addition to an acoustic reference identification signature for a component or a component group, are stored in the server which, in each case, correspond to an actual defect of a component or a component group, wherein an identification signature not corresponding to the reference identification signature can, in a case of adequate matching with an identification signature corresponding to an actual defect of a component or a component group, be assigned directly to the respective defect of a component or a component group.

3. The method of determining the state of access control devices and sales or payment machines of the access control system according to claim 2, **characterized in that**, in a case of detected identification signatures, which neither correspond to the reference identification signature nor to an identification signature assigned to a defect of a component or a component group, these identification signatures are stored in the server as new identification signatures, which correspond to a not yet classified or categorized defect, wherein the classification or categorization then takes place when the defect is identified.

4. The method of determining the state of access control devices and sales or payment machines of an access control system according to one of the preceding claims, **characterized in that** a vandalism attempt or an application of force are identified in the event of a detected identification signature which cannot be assigned to a component or component group or a deviation of which from all the acoustic reference identification signatures exceeds the second threshold value and cannot correspond to a defect of a component or component group.

5. The method of determining the state of access control devices and sales or payment machines of the access control system according to one of the preceding claims, **characterized in that** reference signatures are stored in the server, which correspond to strong rain or strong wind, wherein if strong rain or strong wind are detected on the basis of a detected identification signature, a temporary deactivation is brought about in order to prevent damage.

## Revendications

1. Procédé, destiné à déterminer l'état de dispositifs de contrôle d'accès et de distributeurs automatiques ou terminaux de paiement d'un système de contrôle d'accès, le profil sonore émis par un composant ou un groupe de composants d'un dispositif de contrôle d'accès ou d'un distributeur automatique ou terminal de paiement d'un système de contrôle d'accès étant détecté en permanence ou à des intervalles de temps prédéfinis dans la gamme des sons audibles et des ultrasons par au moins un microphone et à l'aide du profil sonore enregistré, dans un serveur ou un ordinateur centralisé étant établie une signature d'identification acoustique qui est basée sur le spectre de fréquence du profil acoustique enregistré et/ou sur sa modification dans le temps, la signature d'identification acoustique étant associée à un composant ou à un groupe de composants et comparée avec une signature d'identification acoustique de référence associée audit composant ou audit groupe de composants, sauvegardée sur le serveur, **caractérisé en ce que** dans le cas d'une découverte entre la signature d'identification acoustique et la signature d'identification acoustique de référence sauvegardée sur le serveur d'un écart qui dépasse une première valeur seuil prédéfinie, une usure élevée du composant ou du groupe de composants est décelée, si l'écart entre la signature d'identification acoustique détectée et la signature d'identification acoustique de référence sauvegardée sur le serveur dépasse une deuxième valeur seuil qui est supérieure à la première valeur seuil, un défaut du composant ou du groupe de composants étant décelé, dans le cadre d'une phase d'apprentissage de l'au moins un microphone, les bruits habituels d'un dispositif de contrôle d'accès intact ou d'un distributeur automatique ou terminal de paiement intact d'un système de contrôle d'accès étant enregistrés, les signaux enregistrés étant associés respectivement à un composant ou à un groupes de composants, et à partir des signaux sonores enregistrés, des signatures d'identification de référence pour le composant ou le groupe de composants étant établies et sauvegardées sur le serveur, l'association des signaux sonores et ainsi des signatures d'identification de référence avec le composant ou les groupes de composants s'effectuant **en ce que** le début du fonctionnement du dispositif de contrôle d'accès ou du distributeur automatique ou du terminal de paiement est décelé par les signaux fournis par l'au moins un microphone, sous respect de la séquence précise connue des opérations individuelles du dispositif de contrôle d'accès ou d'un distributeur automatique ou d'un terminal de paiement, les signaux sonores étant associés de manière univoque à une opération et ainsi à un composant ou à un groupe de composants, en conséquence de quoi, les dispositifs de contrôle d'accès et distributeurs automatiques ou terminaux de paiement du système de contrôle d'accès sont connectés au serveur aux fins de la communication de données et l'information sur les composants ou groupes de composants qui sont actifs est transmise au serveur en temps réel, de sorte que dans le serveur, les signaux sonores enregistrés sont associés au composant ou au groupe de composants respectivement actifs au moment présent, l'association d'une signature d'identification détectée à un composant ou à un groupe de composants s'effectuant à l'aide de propriétés caractéristiques du profil sonore émis par le composant ou par le groupe de composants ou l'association d'une signature d'identification détectée à un composant ou à un groupe de composants s'effectuant **en ce qu'**à l'aide de la séquence précise connue des opérations individuelle pendant le fonctionnement d'un dispositif de contrôle d'accès ou d'un distributeur automatique ou terminal de paiement d'un système de contrôle d'accès, la signature d'identification détectée est associée de manière indubitable à une opération et ainsi à un composant ou à un groupe de composants, le début du fonctionnement du dispositif de contrôle d'accès ou du distributeur automatique ou terminal de paiement étant décelé à l'aide des signaux fournis par l'au moins un microphone ou les dispositifs de contrôle d'accès et distributeurs automatiques ou terminaux de paiement étant connectés sur le serveur aux fins de la communication de données et l'information sur les composants ou groupes de composants qui sont actifs étant transmise au serveur en temps réel, de sorte que de cette manière ait lieu l'association d'une signature d'identification détectée à un composant ou à un groupe de composants.

2. Procédé, destiné à déterminer l'état de dispositifs de contrôle d'accès et de distributeurs automatiques ou terminaux de paiement d'un système de contrôle d'accès selon la revendication 1, **caractérisé en ce que** parallèlement à une signature d'identification acoustique pour un composant ou un groupe de composants, des signatures d'identification sont sauvegardées sur le serveur, lesquelles correspondant respectivement à un défaut concret d'un composant ou d'un groupe de composants, dans le cas d'une concordance suffisante avec une signature d'identification correspondant à un défaut concret, une signature d'identification ne correspondant pas à la signature d'identification de référence pouvant être directement associée au défaut respectif d'un composant ou d'un groupe de composants.

3. Procédé, destiné à déterminer l'état de dispositifs de contrôle d'accès et de distributeurs automatiques ou terminaux de paiement d'un système de contrôle d'accès selon la revendication 2, **caractérisé en ce que** si des signatures d'identification sont détectées, qui ne correspondent ni à la signature d'identification de référence, ni à une signature d'identification associée à un défaut d'un composant ou d'un groupe de composants, elles sont sauvegardées sur le serveur comme étant des nouvelles signatures d'identification qui correspondant à un défaut qui n'est pas encore classifié ou catégorisé, la classification ou la catégorisation ayant lieu une fois que le défaut a été identifié.

4. Procédé, destiné à déterminer l'état de dispositifs de contrôle d'accès et de distributeurs automatiques ou terminaux de paiement d'un système de contrôle d'accès selon l'une quelconque des revendications précédentes, **caractérisé en ce que**, si une signature d'identification est détectée, qui ne peut être associée à aucun composant ou groupe de composants ou dont l'écart par rapport à l'ensemble des signatures d'identification acoustiques de référence dépasse la deuxième valeur seuil et ne peut correspondre à aucun défaut d'un composant ou d'un groupe de composants, une tentative de vandalisme ou un acte de violence est décelé(e) .

5. Procédé, destiné à déterminer l'état de dispositifs de contrôle d'accès et de distributeurs automatiques ou terminaux de paiement d'un système de contrôle d'accès selon l'une quelconque des revendications précédentes, **caractérisé en ce que** dans le serveur sont sauvegardées des signatures de référence qui correspondent à une pluie forte ou à un vent violent, si sur la base d'une signature d'identification une pluie forte ou un vent violent est décelé(e), une désactivation temporaire est initiée, pour éviter une détérioration.
